# EUROPÄISCHE PATENTSCHRIFT

(11) **EP 3 895 282 B1**
(45) Veröffentlichungstag und Bekanntmachung des Hinweises auf die Patenterteilung: **20.03.2024**
(21) Anmeldenummer: 19828607.2
(22) Anmeldetag: 11.12.2019
(51) Int. Cl.: H02K 3/50, H02K 3/12, H02K 3/24, H02K 5/20, H02K 15/06, H02K 15/085

(54) **STATOR, ANSCHLUSSKOMPONENTE UND ELEKTRISCHE MASCHINE**
STATOR, CONNECTION COMPONENT, AND ELECTRIC MACHINE
STATOR, COMPOSANT DE RACCORDEMENT ET MACHINE ÉLECTRIQUE

(30) Priorität: 12.12.2018 DE 102018131965
(43) Veröffentlichungstag der Anmeldung: 20.10.2021
(73) Patentinhaber: Jheeco E-Drive AG, 9492 Eschen (LI)
(72) Erfinder: BUOL, Roland, 7323 Wangs (CH); STÖCK, Martin, 9465 Salez (CH)
(74) Vertreter: Grünecker Patent- und Rechtsanwälte PartG mbB
(86) Internationale Anmeldenummer: PCT/EP2019/084727
(87) Internationale Veröffentlichungsnummer: WO 2020/120612

(56) Entgegenhaltungen:
- EP-A1- 2 112 747
- WO-A1-2005/004308
- DE-A1-102016 221 043
- DE-T5-112016 003 666
- US-A- 4 115 915
- US-A1- 2013 200 743
- US-A1- 2014 306 561
- US-A1- 2018 166 931

## Beschreibung

Die Erfindung betrifft einen Stator für eine elektrische Maschine.

Zusammengesetzte Wicklungen sind aus Segmentleitern, die auch als Stableiter bezeichnet werden, aufgebaute Wicklungen. Die Segmentleiter werden unmittelbar, durch aufeinander Zubiegen, oder mittelbar über Verschaltungsstege zu Halbwicklungen verbunden.

Aus dem Stand der Technik ist bekannt, Segmentleiter über separate Kupferverbinder bzw. Verschaltungsstege zu Halbwicklungen zu verbinden. Die exakte Positionierung der Verschaltungsstege und der Stableiter gegenüber einander, zur darauffolgenden elektrischen Kontaktierung bzw. Verbindung, ist schwierig. In der Druckschrift US 9 118 224 B2 ist die relative Positionierung und elektrische Kontaktierung durch Schraub- bzw. Stiftelemente gelöst. Die Verschaltungsstege müssen dazu einzeln aufgelegt werden. Die Montage ist somit jedoch sehr aufwendig.

Alternativ ist bekannt, die Segmentleiter unmittelbar, d.h. ohne Zwischenschaltung von Verschaltungsstegen, miteinander zu verbinden. Die Segmentleiter werden hierzu mithilfe von Positionierwerkzeugen in Anlage miteinander gebracht und direkt verschweißt. Die Druckschrift DE 11 2015 001 994 A5 zeigt beispielsweise einen Wickelkopf für formverpresste Drahtlitzen bzw. Formlitzen, wobei die Formlitzen zur Verbindung aufeinander zugebogen und miteinander verschweißt werden. Jedoch weist der resultierende Wickelkopf eine große Bauhöhe auf.

Aus der US4115915A und der DE102016221043A1 sind weitere Statoren mit Verschaltungsstegen zur Verschaltung von Stableitern bekannt.

Es ist Aufgabe der Erfindung einen Stator anzugeben, der eine Verschaltung von Stableitern auf vereinfachte und kostengünstige Weise zur Bereitstellung von zusammengesetzten Wicklungen ermöglicht, eine optimierte Prozesssicherheit zur sicheren elektrischen Verbindung bereitstellt sowie einen reduzierten Bauraum aufweist. Darüber hinaus ist es Aufgabe der Erfindung eine Anschlusskomponente und eine elektrische Maschine anzugeben.

Diese Aufgabe wird in Hinblick auf den Stator durch den Anspruch 1 gelöst und mit Blick auf die elektrische Maschine durch den Anspruch 10.

Gemäß der vorliegenden Erfindung ist ein Stator für eine elektrische Maschine umfassend eine Vielzahl von Stableitern vorgesehen, die um eine Rotationsachse des Stators radial verteilt und jeweils voneinander beabstandet angeordnet sind, sodass sich die Stableiter in Längsrichtung der Rotationsachse erstrecken, sowie mit einer Vielzahl von Verschaltungsstegen, wobei jeweils ein Verschaltungssteg zwei Stableitern zur Ausbildung einer elektrischen Verbindung zugeordnet ist. Die Vielzahl von Stableitern ist in Stableiter-Gruppen mit jeweils mehreren Stableitern unterteilbar und die Vielzahl von Verschaltungsstegen ist in Verschaltungssteg-Gruppen mit jeweils mehreren Verschaltungsstegen unterteilbar, wobei die Verschaltungsstege einer Verschaltungssteg-Gruppe zur elektrischen Verbindung zweier Stableitern aus verschiedenen Stableitergruppen vorgesehen sind.

Die Verschaltungsstege weisen jeweils eine bogenförmige Ausgestaltung, bevorzugt eine C-bogenförmige Ausgestaltung, auf, die sich in radialer Richtung und um die Rotationsachse des Stators erstreckt. Des Weiteren sind die Verschaltungssteg-Gruppen zur Ausbildung jeweils einer Verschaltungsebene entlang der Rotationsachse im Bereich eines längsseitigen Endes der Stableiter, der jeweils zugeordneten, elektrisch zu verbindenden Stableiter-Gruppen, angeordnet.

Die Erfindung basiert auf dem Grundgedanken, dass jeweils eine Vielzahl von Verschaltungsstegen und Stableitern in Gruppen unterteilbar und auf vorteilhafte Weise derart elektrisch verbindbar sind, dass zusammengesetzte Wicklungen bereitstellbar sind. Anhand der einzelnen Gruppen von Verschaltungsstegen und Stableitern können einzelne Verschaltungsebenen ausgebildet und kompakt angeordnet werden.

Insbesondere kann anhand der Anordnung der Verschaltungsstege in Verschaltungssteg-Gruppen entlang verschiedener Verschaltungsebenen ein vorteilhafter Kompromiss zwischen radialem Bauraum und dem Bauraum in Richtung der Rotationsachse des Stators bereitgestellt werden.

Der Stator kann insbesondere für eine elektrische Maschine, also eine Synchronmaschine oder eine Asynchronmaschine, vorgesehen sein.

Ferner können unter Stableitern im Sinne der Erfindung insbesondere elektrische Leiter zur Ausbildung von zusammengesetzten Wicklungen verstanden werden.

Demnach können Stableiter einteilig (Massivleiter) oder mehrteilig (Drahtlitzen) sein und beispielsweise in Form von Haarnadeln (Hairpins) oder I-förmig (I-Pins) ausgebildet sein. Stableiter können insbesondere auch als formverpresste und verdrillte Drahtlitzen ausgestaltet sein.

Unter einer Vielzahl von Verschaltungsstegen sind vorzugsweise mehr als zwei Verschaltungsstege, insbesondere drei Verschaltungsstege, vier Verschaltungsstege oder fünf Verschaltungsstege, zu verstehen. Anhand der Verschaltungsstege bzw. einer Verschaltungssteg-Gruppe kann eine korrespondierende Vielzahl von Stableitern zweier verschiedener Stableiter-Gruppen untereinander elektrisch verbunden werden.

Im Sinne der Erfindung bildet eine Verschaltungssteg-Gruppe eine Verschaltungsebene aus, die vorzugsweise orthogonal zu der Rotationsachse des Stators ausgerichtet ist. Eine Verschaltungsebene erstreckt sich demnach an einer Position entlang der Rotationsachse, insbesondere in den Bereichen der längsseitigen Enden der Stableiter bzw. den Stirnbereichen des Stators, in orthogonaler Richtung zu der Rotationsachse.

Unter den Stirnbereichen des Stators sind insbesondere die einander gegenüberliegenden, längsseitigen Enden der Stableiter zu verstehen. An den längsseitigen Enden bzw. in dem Bereich entlang der längsseitigen Enden der Stableiter können jeweils eine oder mehrere Verschaltungsebenen ausgebildet sein. Ferner können mehrere Verschaltungssteg-Gruppen in derselben Verschaltungsebene zu Verschaltung unterschiedlicher Stableiter bzw. Stableiter-Gruppen vorgesehen sein.

Des Weiteren ist vorgesehen, dass die Stableiter einer Stableiter-Gruppe bzw. der miteinander elektrisch zu verbindenden Stableiter-Gruppen jeweils dieselbe Höhe bzw. Längserstreckung aufweisen. So bildet eine Verschaltungssteg-Gruppe jeweils eine Ebene, also eine Verschaltungsebene, aus, entlang der die zugeordneten Stableiter mittels der Verschaltungsstege elektrisch miteinander verbunden werden können.

In einer bevorzugten Ausführungsform weisen die Verschaltungsstege einen rechteckigen Querschnitt mit einer Höhe und einer Breite auf.

Vorzugsweise unterscheiden sich Höhe und Breite der Verschaltungsstege um höchstens das Zweifache. Dadurch kann die Gesamtlänge der Wicklung verkleinert und damit deren Widerstand verkleinert und somit die Leitungsverluste beschränkt werden.

Vorzugsweise unterscheiden sich Höhe und Breite der Verschaltungsstege um mindestens das 1,5-fache. Durch die gegenüber quadratischem Querschnitt vergrößerte Oberfläche kann die Kühlung verbessert werden.

Weiterhin kann der Querschnitt der Verschaltungsstege zwischen 30% und 60% gegenüber dem Wirkungsgradoptimum verkleinert sein. Dadurch lässt sich der Materialeinsatz reduzieren ohne einen befriedigenden Wirkungsgrad zu verlassen.

Somit kann ein vorteilhafter Ausgleich zwischen Kühloberfläche, strombedingten Leitungsverluste und Materialeinsatz erzielt werden.

Gemäß einer weiteren Ausführungsform weisen die Stableiter jeweils Stableiter-Kontaktflächen und die Verschaltungsstege jeweils korrespondierende Verschaltungssteg-Kontaktflächen zur Bereitstellung eines elektrischen Kontaktes auf, wobei sich die Stableiter-Kontaktflächen und die Verschaltungssteg-Kontaktflächen wenigstens teilweise in radialer Richtung des Stators erstrecken.

An längsseitigen Enden der Stableiter sind jeweils eine Stableiter-Kontaktfläche und an Enden der Verschaltungsstege jeweils Verschaltungssteg-Kontaktflächen ausgebildet, wobei die Stableiter-Kontaktflächen und die Verschaltungssteg-Kontaktflächen jeweils korrespondierend zueinander ausgebildet sind, sodass ein vorzugsweise vorspannbarer Flächenkontakt bereitstellbar ist.

Bevorzugter Weise können die korrespondierenden Kontaktflächen derart ausgebildet sein, dass die Kontaktflächen beim Zusammensetzen des Stators miteinander in Anschlag kommen, insbesondere im Zuge einer Rotationsbewegung zur Vorpositionierung. Die wenigstens teilweise Erstreckung der Kontaktflächen in radialer Richtung kann insbesondere im Sinne von beispielsweise keilförmigen Kontaktflächen verstanden werden, wobei eine Richtungskomponente der Keilform in radiale Richtung verläuft.

So können die Verschaltungsstege mit den zugeordneten Stableitern im vorpositionierten Zustand, also im vorzugsweise vorgespannten Flächenkontakt, kraftschlüssig und/oder formschlüssig und /oder stoffschlüssig verbunden werden, insbesondere mittels eines Strahlschweißverfahrens. Vorzugsweise kann dies in Form eines Laser- oder Elektronenschweißverfahrens, eines Widerstandschweißverfahrens, eines Ultraschallschweißverfahrens oder eines Reibschweißverfahrens bzw. Rührreibschweißen erfolgen.

Erfindungsgemäß sind die Verschaltungsstege einer Verschaltungssteg-Gruppe ineinander verschachtelt, insbesondere C-förmig verschachtelt, und in radialer Richtung voneinander beabstandet angeordnet. Insbesondere können die Verschaltungsstege einer Verschaltungssteg-Gruppe in radialer Richtung verschachtelt angeordnet sein, sodass eine Bauhöhe des Stators in Längsrichtung der Rotationsachse reduzierbar ist.

So können radial innenliegende Verschaltungsstege von radial außenliegenden Verschaltungsstegen umgriffen werden, um eine räumliche Erstreckung der Verschaltung in radialer Richtung zu ermöglichen und die Bauraumhöhe des Stators zu reduzieren. Anhand eines Abstandes der Verschaltungsstege untereinander ist keine separate Isolierung der Verschaltungsstege notwendig.

Erfindungsgemäß verlaufen einzelne Verschaltungsstege einer Verschaltungssteg-Gruppe an zumindest einem ihrer längsseitigen Enden gegenüber der Rotationsachse jeweils in radialer Richtung z-förmig. Durch die Z-Form befindet sich eine Kontaktfläche auf axial anderer Höhe als der Hauptteil des Verschaltungsstegs.

Insbesondere im Sinne einer C-bogenförmigen Ausgestaltung der Verschaltungsstege ist ein Hineinragen der Verschaltungsstege in radialer Richtung zu den Stableitern vorgesehen. So kann eine vorteilhafte Anordnung der Verschaltungsstege zur elektrischen Verbindung jeweils zweier Stableiter erzielt werden.

Des Weiteren ist anhand eines Z-förmigen Verlaufes eines Endes bzw. Endbereiches eines Verschaltungssteges einer Verschaltungssteg-Gruppe insbesondere ein Wechsel der Verschaltungsebene zur Weiterleitung einer Spannung bzw. eines Stroms an weitere Verschaltungsebenen des Stators möglich.

Gemäß einer bevorzugten Ausführungsform weisen die Stableiter aus elektrisch voneinander getrennten Stableiter-Gruppen unterschiedliche Längserstreckungen auf, sodass die jeweils zugeordneten Verschaltungssteg-Gruppen in Richtung der Rotationsachse voneinander beabstandet angeordnet sind, zur Ausbildung mehrerer Verschaltungsebenen.

Auf diese Weise können Verschaltungsebenen bereitgestellt werden, die mit einem bedarfsweisen Abstand zueinander angeordnet sind. Es kann eine kompakte Bauform des Stators erzielt werden. Einzelne Verschaltungsebenen erstrecken sich jeweils in einer orthogonalen Ebene gegenüber der Rotationsachse des Stators.

In einer weiteren Ausführungsform sind die Verschaltungsstege der Verschaltungssteg-Gruppen, die eine Verschaltungsebene ausbilden, in einer Isolationsscheibe angeordnet, und/oder die Verschaltungssteg-Gruppen unterschiedlicher Verschaltungsebenen sind durch wenigstens einen Abstandshalter oder wenigstens eine Halteklammer voneinander beabstandet angeordnet.

An den längsseitigen Enden bzw. in den Stirnbereichen der Stableiter können jeweils mehrere Isolationsscheiben vorgesehen sein. Die einzelne Isolationsscheibe ist vorzugsweise ringförmig ausgebildet und weist eine Vielzahl von Verschaltungsstegen auf, wobei jeweils ein Verschaltungssteg zwei Stableitern zur Ausbildung einer elektrischen Verbindung zugeordnet ist.

Insbesondere kann eine einzelne Isolationsscheibe mehrere Verschaltungssteg-Gruppen aufweisen, die radial verteilt entlang der Isolationsscheibe angeordnet sind.

Die Isolationsscheibe kann als eine Ringscheibe ausgebildet sein, wobei die Verschaltungsstege über einen Innendurchmesser der Isolationsscheibe hinausragen, um eine elektrische Kontaktierung mit den Stableitern zu ermöglichen.

Mittels der Isolationsscheibe kann eine Vorpositionierung und Zuordnung der Verschaltungsstege gegenüber den Stableitern bereitgestellt werden. Die Zuordnung und Anordnung der Verschaltungsstege bzw. Verschaltungssteg-Gruppen gegenüber den Stableitern bzw. Stableiter-Gruppen kann in modularer Weise erfolgen.

Des Weiteren können die Isolationsscheibe eine Mehrzahl von Nuten aufweisen, zur Aufnahme der Verschaltungsstege, oder die Mehrzahl von Verschaltungsstegen ist in den Isolationsscheiben eingegossen.

Nach einer Ausführungsform ist, insbesondere zur Herausführung der Wicklungsphase und/oder zur Zusammenführung der Wicklungsphasen zu einem Sternpunkt, eine Anschlussebene vorgesehen mit einer Anschluss-Isolationsscheibe, insbesondere ringförmigen Anschluss-Isolationsscheibe, und Anschlussstegen, zur Bereitstellung wenigstens zweier Phasenanschlüsse und/oder eines Sternpunktanschlusses. Insbesondere können Phasen- und/oder Sternpunktanschlüsse an die Anschlussstege elektrisch angeschlossen werden zur zweckmäßigen Strom- bzw. Spannungsversorgung des Stators.

Die Anschluss-Isolationsscheibe ist vorzugsweise ringförmig ausgebildet. Insbesondere ist die Anschluss-Isolationsscheibe vergleichbar mit den übrigen Isolationsscheiben ausgebildet. Des Weiteren können die Anschlussstege vergleichbar mit den Verschaltungsstegen ausgebildet sein. So können die Anschlussstege in der Anschluss-Isolationsscheibe aufgenommen bzw. angeordnet sein, sodass eine Vorpositionierung und Kontaktierung mit den jeweiligen Stableitern möglich ist.

In einer Ausführungsform sind die Phasenanschlüsse und/oder der Sternanschluss jeweils mittels wenigstens eines Anschlussstückes, insbesondere eines blockartigen Anschlussstückes, ausgebildet, wobei das wenigstens eine Anschlussstück mit einem Anschlusssteg kraftschlüssig und/oder formschlüssig und/oder stoffschlüssig verbunden, insbesondere verschweißt, ist.

Jedes Anschlussstück ist mit einem Anschlusssteg elektrisch verbindbar.

Insbesondere können die Anschlusstücke mit den Anschlussstegen durch Laserstrahlschweißen, Elektronenstrahlschweißen, Reibschweißen bzw. Rührreibschweißen oder dergleichen verbunden werden.

Des Weiteren kann an den Anschlussstücken jeweils ein Gewinde zur zweckmäßigen Kontaktierung des Stators mit einer Steuereinheit, einem Antriebsumrichter oder dergleichen vorgesehen sein.

Gemäß einer weiteren Ausführungsform ist eine Anschlusskomponente vorgesehen, die auf die Anschlussstücke aufsetzbar ist, zur mechanischen Fixierung und Beabstandung der Anschlussstücke gegenüber einander. Die Anschlusskomponente ist vorzugsweise aus einem isolierenden Material wie beispielsweise Kunststoff gefertigt.

Somit können die Anschlussstücke gegenüber einander sowie an dem Stator zweckmäßig angeordnet und befestigt werden, insbesondere entlang der der Anschluss-Isolationsscheibe in der vorgesehenen Anschlussebene.

Insbesondere kann die Anschlusskomponente wenigstens eine Materialaussparung zur Aufnahme wenigstens eines Anschlussstückes aufweisen, sodass das Anschlussstück in der Materialaussparung mechanisch fixierbar ist.

Insbesondere bei Einsatz mehrere Anschlussstücke kann somit eine gezielte Positionierung und Beabstandung untereinander anhand der Anschlusskomponente bereitgestellt werden.

In einem nebengeordneten Aspekt der Erfindung ist eine elektrische Maschine mit einem Stator gemäß der vorliegenden Erfindung vorgesehen.

Im Folgenden wird die Erfindung mit Bezug auf die beigefügten Zeichnungen anhand von mehreren Ausführungsbeispielen im Detail erläutert.

Es zeigen schematisch:
- Fig. 1: perspektivische Darstellung der zusammengesetzten Wicklungen eines erfindungsgemäßen Stators;
- Fig. 2: Seitenansicht eines Statorblechpakets;
- Fig. 3: perspektivische Ansicht einer Wicklungsphase mit Sternpunkt- und Phasenanschluss;
- Fig. 4: weitere perspektivische Ansicht einer Wicklungsphase mit Sternpunkt- und Phasenanschluss;
- Fig. 5a-e: verschiedene Verschaltungsebene bzw. eine Anschlussebene eines Stirnbereiches des Stators;
- Fig. 6: Darstellung der Verbindung zwischen Stableiter und Verschaltungssteg;
- Fig. 7: Draufsicht auf eine Befestigungsmöglichkeit der Verschaltungsstege mittels Halteklammern;
- Fig. 8: Querschnittsansicht der Befestigungsmöglichkeit der Verschaltungsstege nach Fig. 8;
- Fig. 9: perspektivische Explosionsdarstellung eines erfindungsgemäßen Stators;
- Fig. 10: perspektivische Darstellung von Fluideinlässen und Fluidauslässen für eine Kühlfluidströmung eines Stators; und
- Fig. 11: Darstellung einer Kühlfluidströmung innerhalb des Stators in einer Querschnittsansicht.
- Fig. 12: eine grafische Darstellung der Kupferverluste in Abhängigkeit von einer Querschnittsform der Verschaltungsstege
- Fig. 13: eine tabellarische Darstellung der Kupferverluste in Abhängigkeit von einer Querschnittsform der Verschaltungsstege

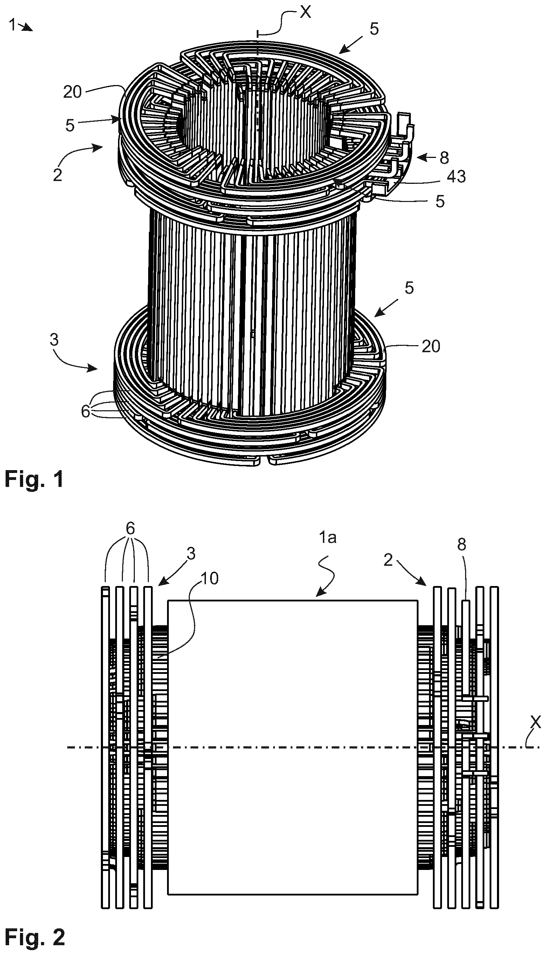

In Fig. 1 ist eine perspektivische Darstellung der zusammengesetzten Wicklungen eines Stators 1 gezeigt.

Der Stator 1 ist mit radial verteilten und voneinander beabstandeten Stableitern 10 ausgebildet, die sich in Längsrichtung der Rotationsachse X erstrecken. Längsseitige Enden der Stableiter 10 stellen einander gegenüberliegende Stirnbereiche 2; 3 des Stators 1 dar bzw. bilden diese aus.

In den Stirnbereichen des Stators 2; 3 bzw. an den längsseitigen Enden der Stableiter 10 sind jeweils mehrere Anordnungen von Verschaltungsstegen 20 vorgesehen. So bilden die Verschaltungsstege 20 unterschiedliche Verschaltungsebenen 6 aus, um eine zweckmäßige Verschaltung der Stableiter 10 zur Bereitstellung von zusammengesetzten Wicklungen zu erzielen.

Die Verschaltungsstege 20 erstrecken sich gemäß Fig. 1 C-bogenförmig und erstrecken sich, insbesondere an ihren Endbereichen, jeweils in radialer Richtung zur Bereitstellung eines Kontaktes mit jeweils zugeordneten Stabelemente 10.

Gemäß Fig. 1 ist erkennbar, dass einzelne Verschaltungsstege 20 in Verschaltungssteg-Gruppen 5 gegliedert bzw. unterteilt sind. Radial innenliegende Verschaltungsstege 20 werden von radial außenliegenden Verschaltungsstegen 20 umgriffen.

An dem oberen Stirnbereich 2 ist zwischen den einzelnen Verschaltungsebenen 6 des Weiteren eine Anschlussebene 8 mit Phasenanschlüssen zur Strom- bzw. Spannungsversorgung vorgesehen, insbesondere zur Herausführung der Wicklungsphase und/oder zur Zusammenführung der Wicklungsphasen zu einem Sternpunkt.

In Fig. 2 ist eine Seitenansicht eines Statorblechpakets 1a mit der in Fig. 1 dargestellten zusammengesetzten Wicklung gezeigt.

Insbesondere ist aus Fig. 2 ersichtlich, dass die verschiedenen Verschaltungsebenen 6 an den Stirnseiten 2; 3 des Stators 1 bzw. Statorblechpakets 1a in Längsrichtung einer Rotationsachse X voneinander beabstandet sind.

Die Verschaltungsebenen 6 werden jeweils durch die Verschaltungsstege 20 bzw. Verschaltungssteg-Gruppen 5 gebildet.

Des Weiteren ist an einer Stirnseite 2 des Statorblechpakets 1a die Anschlussebene 8 ausgebildet.

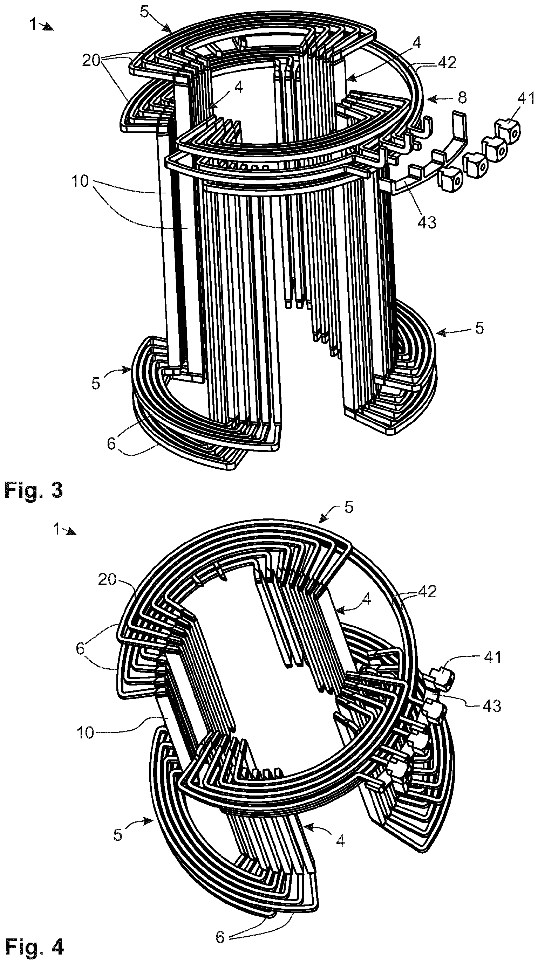

In den Fig. 3 und 4 sind perspektivische Ansichten einer Wicklungsphase mit einem Sternpunkt- und drei Phasenanschlüssen dargestellt.

Insbesondere ist die Aufgliederung der Verschaltungsstege 20 in Verschaltungssteg-Gruppen 5 zur geeigneten elektrischen Verbindung der Stableiter 10, unterteilt in Stableiter-Gruppen 4, dargestellt.

So sind die Stableiter 10 bzw. Stableiter-Gruppen 4 zur Bereitstellung von zusammengesetzten Wicklungen anhand der Verschaltungsstege 20 bzw. Verschaltungssteg-Gruppen 5 zweckmäßig verbindbar. Anhand der Verschaltungssteg-Gruppen 5 werden einzelne Verschaltungsebenen 6 ausgebildet, die sich jeweils in einem Bereich entlang der Rotationsachse bzw. entlang einem stirnseitigen Längsende der jeweils zugeordneten Stableiter 10 bzw. Stableiter-Gruppe 4 erstrecken.

Des Weiteren ist in den Fig. 3 und 4 die Ausbildung der Anschlussebene 8 mit den Anschlussstegen 42 und den Anschlussstücken 41 dargestellt. Der Stator weist drei Phasenanschlüsse für drei Spannungsphasen sowie einen Sternpunktanschluss auf, welche jeweils mit einem Anschlussstück 41 verbunden sind. Somit ist der Stator 1 über die Anschlussstücke 41 zweckmäßig mit Strom bzw. Spannung beaufschlagbar.

Des Weiteren ist ein Sternpunktverbinder 43 gezeigt, welcher die einzelnen Phasenanschlüsse und den Sternpunktanschluss elektrisch miteinander verbindet. Die drei Phasen sind in einer Sternpunktschaltung verschaltet. Über den Sternpunktanschluss können die Wicklungen des Stators beispielsweise als Induktivitäten eines Gleichstrom-Hochsetzstellers zur Anpassung eines Spannungslevels zum Laden einer Batterie genutzt werden.

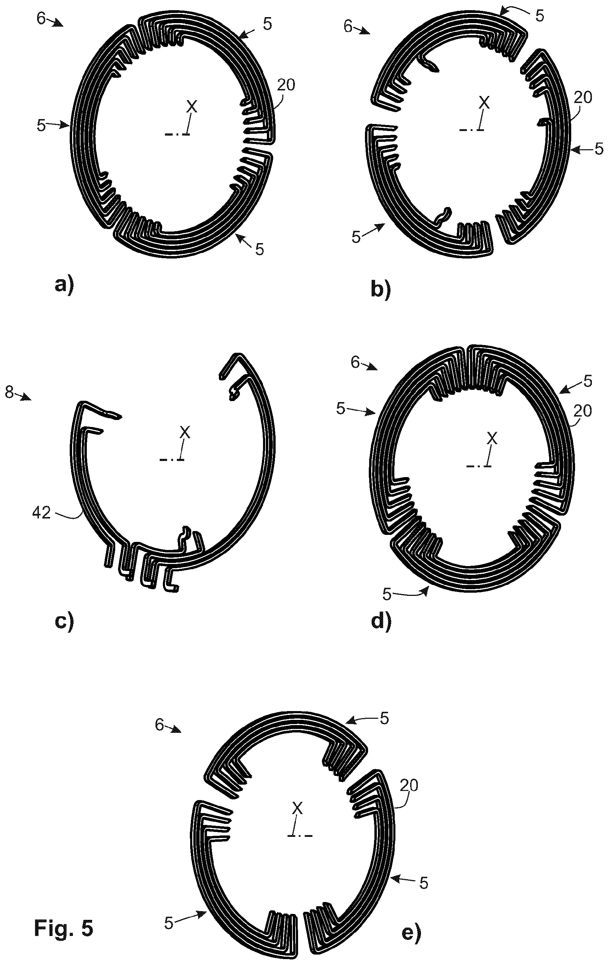

In den Fig. Fig. 5a-e sind verschiedene Verschaltungsebenen 6 bzw. die Anschlussebene 8 eines der Stirnbereiche 2; 3 des Stators 1 dargestellt.

Gemäß den Fig. 5a, 5b, 5d und 5e sind in den Verschaltungsebenen 6 jeweils drei radial verteilt angeordnete Verschaltungssteg-Gruppen 5 mit jeweils vier bis fünf Verschaltungsstegen 20 vorgesehen.

Des Weiteren können gemäß Fig. 5b einzelne Verschaltungsstege 20 eine Z-förmige Erstreckung an einem Längsende aufweisen, insbesondere zum Wechsel der Verschaltungsebene 6 bzw. zur Weiterleitung einer Spannung bzw. eines Stroms in eine benachbart angeordnete Verschaltungsebene 6.

In Fig. 5c ist darüber hinaus die Anschlussebene 8 mit Anschlussstegen 42 dargestellt. Die Anschlussstege 42 können vergleichbar mit den Verschaltungsstegen 20 ausgebildet sein. Ferner können die Anschlussstege 42 abgewinkelte Endbereich aufweisen, zur zweckmäßigen Verbindung mit Anschlussstücken 41.

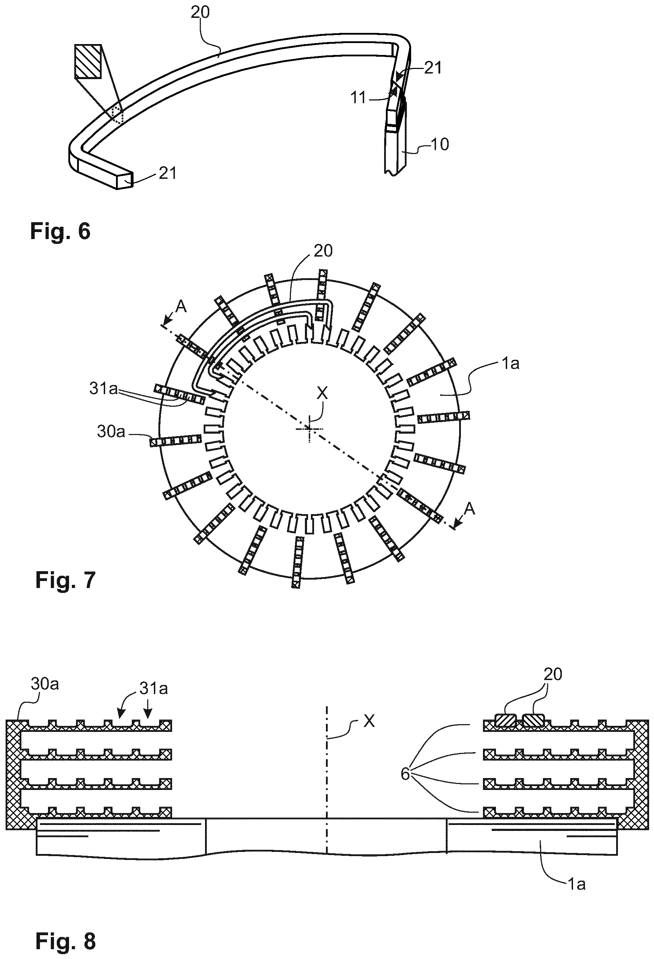

Fig. 6 zeigt eine Darstellung der Verbindung zwischen Stableiter 10 und Verschaltungssteg 20.

Der Verschaltungssteg 20 weist eine rechteckige Querschnittsform mit einer Höhe und einer Breite auf.

An den Endbereichen weist der Verschaltungssteg 20 jeweils Verschaltungssteg-Kontaktfläche 21 auf, die sich zumindest teilweise in radialer Richtung erstreckt. Die Verschaltungssteg-Kontaktfläche 21 ist parallel zur Rotationsachse X liegend. Die Endbereiche des Verschaltungsstegs sind entsprechend keilförmig ausgebildet.

Der Stableiter 10 weist an seinem Längsende eine korrespondierende Stableiter-Kontaktfläche 11 auf. Die Stableiter-Kontaktfläche 11 erstreckt sich wenigstens teilweise in radialer Richtung. Die Stableiter -Kontaktfläche 21 ist parallel zur Rotationsachse X liegend. Der Querschnitt der längsseitigen Endes des Stableiters 10 ist entsprechend keilförmig ausgebildet.

Somit kann eine Kontaktierung des Stableiters 10 mit dem Verschaltungssteg 20 im Zuge einer Vorpositionierung und anschließenden Rotation sichergestellt werden. Vorzugsweise ist ein vorgespannter Flächenkontakt zwischen dem Stableiter 10 und dem Verschaltungssteg 20 bereitstellbar.

In Fig. 7 und 8 ist eine Befestigungsmöglichkeit der Verschaltungsstege in einer Draufsicht bzw. Querschnittsansicht gezeigt. In Fig. 7 ist eine Draufsicht auf eine Befestigungsmöglichkeit von Verschaltungsstegen 20 mittels Halteklammern 30a gezeigt. Gemäß Fig. 7 sind statorumfangsseitig Halteklammern 30a in Nuten 31a vorgesehen, zur Aufnahme und Positionierung der Verschaltungsstege 20. Die Halteklammern 30a sind hierzu in Umfangsrichtung gleichmäßig verteilt auf dem Statorblechpaket 1a angeordnet.

In Fig. 8 ist eine Querschnittsansicht entlang des Schnittes A-A aus Fig. 7 gezeigt. Gemäß Fig. 8 ist ersichtlich, dass Verschaltungsstege 20 in die Halteklammer 30a eingelegt sind. Die Halteklammern 30a sind auf dem Statorblechpaket 1a angeordnet. Die Halteklammern sind hier einstückig ausgebildet zur Aufnahme der Verschaltungsstege mehrerer Ebenen. Denkmöglich ist aber auch eine mehrteilige Ausführung der Halteklammern 30a, insbesondere mit einer Trennung gemäß der einzelnen Verschaltungsebenen 6.

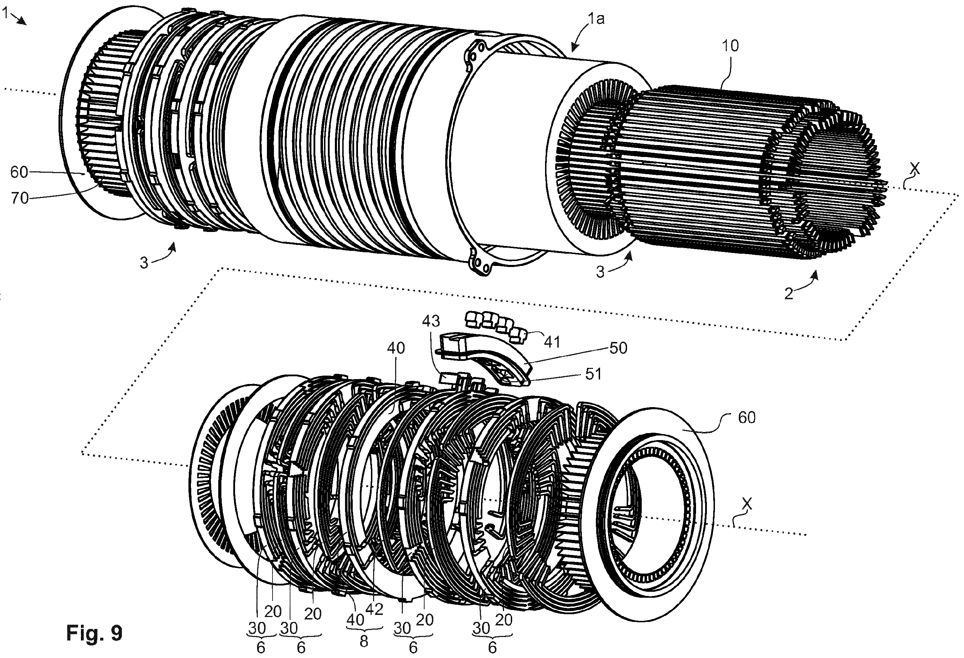

Fig. 9 zeigt eine perspektivische Explosionsdarstellung eines erfindungsgemäßen Stators 1, mit einer weiteren Befestigungsmöglichkeit der Verschaltungsstege. Demnach sind die Komponenten des Stators 1 entlang der Rotationsachse X konzentrisch angeordnet.

Der Stator 1 ist mit den radial verteilten und voneinander beabstandeten Stableitern 10 ausgebildet, die sich in Längsrichtung der Rotationsachse X erstrecken. Längsseitige Enden der Stableiter 10 stellen die einander gegenüberliegende Stirnbereiche 2; 3 des Stators 1 bzw. des Statorblechpakets 1a dar.

Des Weiteren weist der Stator 1 mehrere Isolationsscheiben 30 mit jeweils mehreren Verschaltungsstegen 20 auf.

An den Stirnbereichen 2; 3 des Stators 1 ist jeweils ein ringförmiges Deckelteil 60 angeordnet. Die Deckelteile 60 stellen eine Einfassung der Isolationsscheiben 30 und somit die beidseitigen Abschlüsse des Stators 1 dar.

Die Deckelteile 60 weisen jeweils Trennstege auf, die sich insbesondere in Längsrichtung der Rotationsachse X zwischen die Stableiter 10 bzw. die Verschaltungsstege 20 erstrecken können, insbesondere zur jeweiligen Beabstandung bzw. Isolation (Isolationsstern 70).

Ferner ist die Anschlusskomponente 50 mit Materialaussparungen 51 zur Aufnahme der Anschlussstücke 41 in der Anschlussebene 8 vorgesehen. So können die Anschlussstege 42, die in einer Anschluss-Isolationsscheibe 40 angeordnet und aufgenommen sind, über die Anschlussstücke 41 zweckmäßig mit Strom bzw. Spannung beaufschlagt werden.

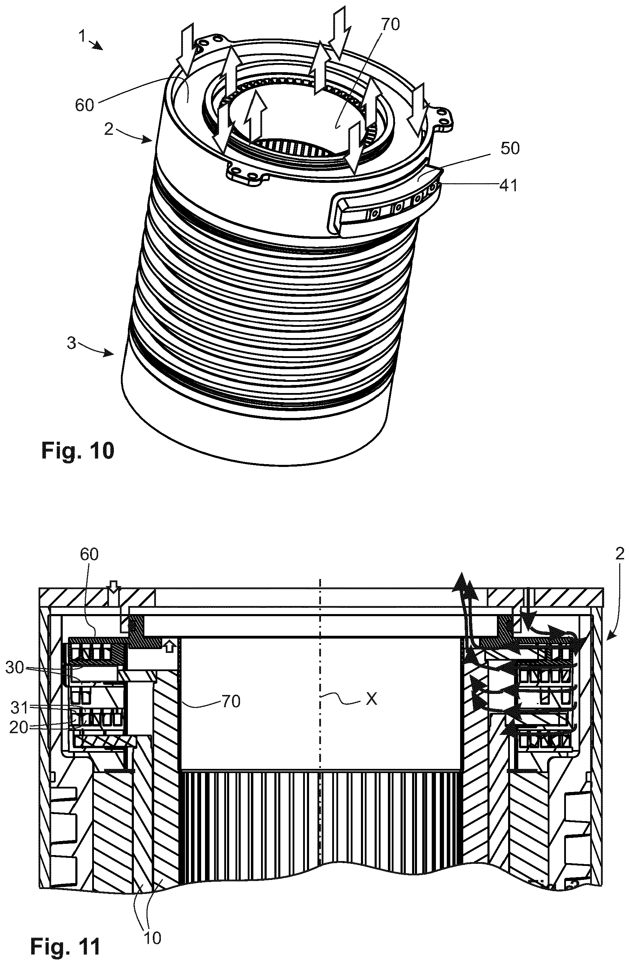

Fig. 10 zeigt eine perspektivische Darstellung von Fluideinlässen und Fluidauslässen für eine Kühlfluidströmung eines Stators 1.

Insbesondere kann vorgesehen sein, dass ein Kühlfluid an den Stirnbereichen 2; 3 des Stators 1 ein- und/oder austreten kann (vgl. Pfeilrichtungen in Fig. 10). Bevorzugter Weise kann der Wickelkopf bzw. können die zusammengesetzten Wicklungen des Stators 1 direkt mit dem Kühlfluid gekühlt werden. Ferner können die Isolationsscheiben 30 zur Durchströmung mit Kühlfluid ausgebildet sein.

Fig. 11 zeigt eine Darstellung einer Kühlfluidströmung innerhalb des Stators 1 in einer Querschnittsansicht.

Am Stirnbereich 2 des Stators 1 kann ein Kühlfluid in den Stator 1 einströmen und durch das Deckelteil 60 bis zu den Isolationsscheiben 30 gelangen (vgl. Pfeilrichtungen in Fig. 11). Ferner können die Isolationsscheiben 30 von dem Kühlfluid durchströmt werden, zur Kühlung der einzelnen Verschaltungsstege 20 in den Nuten 31 der Isolationsscheiben 30.

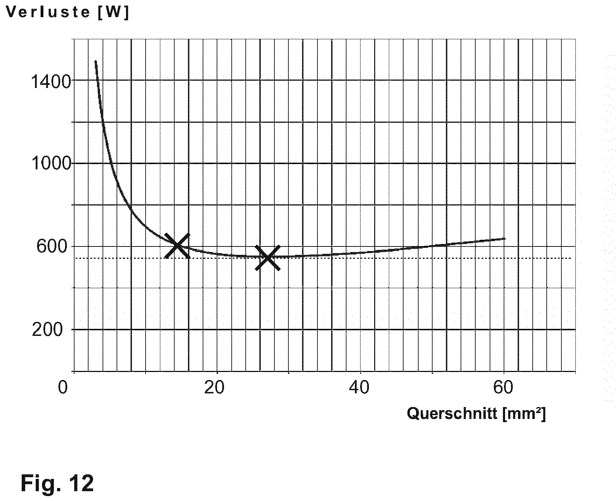

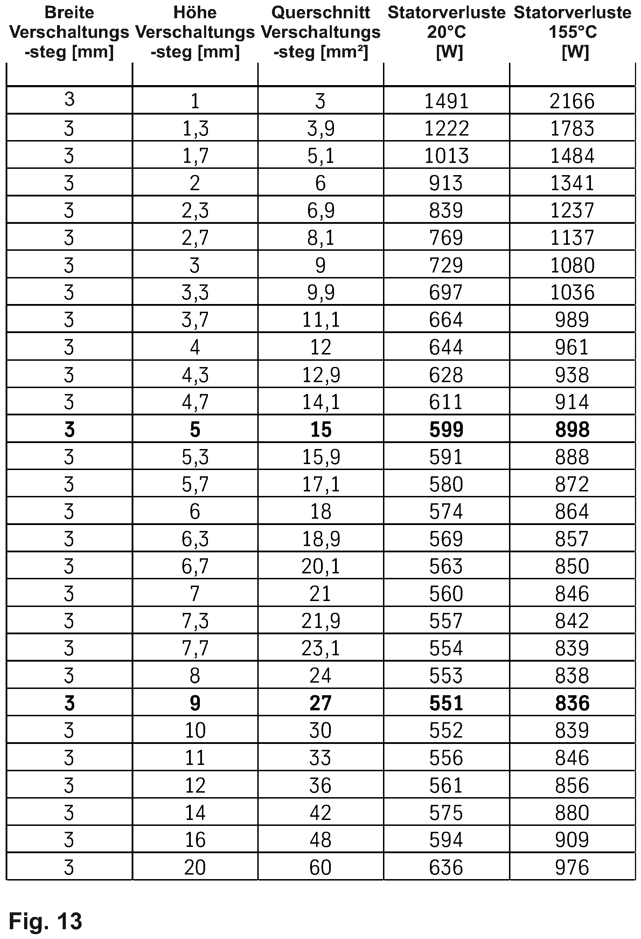

Fig. 12 und 13 zeigen eine grafische bzw. tabellarische Darstellung der Leitungsverluste, die auch als Kupferverluste bezeichnet werden können, in Abhängigkeit von einer Querschnittsform der Verschaltungsstege. Die Breite der Verschaltungsstege wird als konstant angenommen. Die Kupferverluste ergeben sich aus dem Gesamtwiderstand der Wicklung multipliziert mit dem Stromquadrat. Der Widerstand jeder Wicklungsphase ergibt sich aus der Serienschaltung von Stableitern und Verschaltungsstegen einer Phase. Die Widerstände sind auch temperaturabhängig, wobei für das Material Kupfer näherungsweise ein Temperaturkoeffizient von 0,0039/K gewählt werden kann. Für die übrigen Faktoren gelten entsprechende Literaturwerte. Der Widerstand ergibt sich aus dem spezifischen Widerstand multipliziert mit der Länge eines Leiters geteilt durch seinen Querschnitt. Die spezifischen Widerstände der Stableiter und der Strom sind vorgegeben. Ein derartiges Modell kann ohne weitere Schwierigkeiten erstellt werden, so dass auf die Modellerstellung hier nicht näher eingegangen wird.

Dem Beispiel aus Fig. 12 und 13 liegt die Statorwicklung aus Fig. 1 mit insgesamt 120 Stableitern zugrunde, die jeweils eine mittlere Länge von etwa 22 cm aufweisen. Die Gesamtlänge der Wicklung inklusive der Verschaltungsstege bewegt sich damit in einer Größenordnung von 12m. Die Breite der Verschaltungsstege wird mit 3mm als konstant angenommen. Der Nennstrom wird zu 220A angenommen. Soll für das gegebene Beispiel ein verlustoptimaler Querschnitt gewählt werden, so wären dies ca. 27 mm² oder Kantenlängen von 3 mm auf 9 mm. Werden die Kantenlängen höher, verlängert dies die Höhe des Wickelkopfes, so dass die einzelnen Stableiter länger ausgeführt werden müssen, so dass der Gesamtwiderstand, und damit die Leitungsverluste steigen. Verringert man die Höhe der Verschaltungsstege, so wird der Wickelkopf kürzer, so dass die Stableiter im Mittel kürzer ausgeführt werden können. Dies senkt den elektrischen Widerstand. Gleichzeitig verringert sich der stromführende Querschnitt der Verschaltungsstege, so dass der Gesamtwiderstand effektiv steigt. Die Wirkungsgradeinbußen sind jedoch bei einer Reduktion der Querschnittsflächen von nicht mehr als ca. 30-60% im Vergleich zu dem Querschnitt, der zu einem optimalen Wirkungsgrad führt, als geringfügig anzusehen. So kann in Abhängigkeit der vorhergesehen Kühlung, insbesondere bei Ölkühlung, beispielsweise ein vorteilhafter Querschnitt von 3 auf 5 oder 15 mm² gewählt werden.

In Fig. 12 ist das Verlustoptimum für einen kalten Stator bei 20°C mit 551W, vgl. Fig. 13, als Kreuz eingezeichnet. Ferner ist ein Verlustzustand bei optimiertem Verschaltungsstegquerschnitt mit 599W, vgl. Fig. 13 eingezeichnet.

Die Ausführungen gelten sowohl für Verluste für einen Stator in kaltem Zustand, das heißt bei einer Temperatur von 20°C als auch für einen Stator in einem warmgelaufenen Zustand, das heißt bei einer Temperatur von ca. 155°C.Zusammenfassend kann anhand der vorliegenden Erfindung ein Stator 1 mit zusammengesetzten Wicklungen bereitgestellt werden, der auf einfache Weise herzustellen ist und gleichzeitig einen reduzierten Bauraum aufweist. Insbesondere kann eine vorteilhafte Verschaltung der Stableiter 10 entlang von einzelnen Verschaltungsebenen 6 gezielt und platzsparend erfolgen.

Ferner liegt in Form der Anschlussebene 8 eine Möglichkeit zur zentralen Beaufschlagung des Stators 1 mit Strom bzw. Spannung vor, insbesondere zur Herausführung der Wicklungsphase und/oder zur Zusammenführung der Wicklungsphasen zu einem Sternpunkt. Darüber hinaus ist eine vorteilhafte Temperierung, insbesondere anhand von mit Kühlfluid durchströmbaren Isolationsscheiben 30 verfügbar.

Der Stator eignet sich insbesondere für einen Traktionsmotor eines elektrisch angetriebenen Fahrzeugs.

### Bezugszeichenliste

- 1: Stator
- 1a: Statorblechpaket
- 2: Stirnbereich des Stators
- 3: Stirnbereich des Stators
- 4: Stableiter-Gruppe
- 5: Verschaltungssteg-Gruppe
- 6: Verschaltungsebene
- 8: Anschlussebene
- 10: Stableiter
- 11: Stableiter-Kontaktfläche
- 20: Verschaltungssteg
- 21: Verschaltungssteg-Kontaktfläche
- 30: Isolationsscheibe
- 30a: Halteklammer/Abstandshalter
- 31: Nut
- 31a: Nut
- 40: Anschluss-Isolationsscheibe
- 41: Anschlussstück
- 42: Anschlussstege
- 43: Sternpunktverbinder
- 50: Anschlusskomponente
- 51: Materialaussparung
- 60: Deckelteil
- 70: Isolationsstern
- X: Rotationsachse

## Patentansprüche

1. Stator (1) für eine elektrische Maschine umfassend eine Vielzahl von Stableitern (10), die um eine Rotationsachse (X) des Stators (1) radial verteilt und jeweils voneinander beabstandet angeordnet sind, sodass sich die Stableiter (10) in Längsrichtung der Rotationsachse (X) erstrecken, sowie mit einer Vielzahl von Verschaltungsstegen (20), sodass jeweils ein Verschaltungssteg (20) zwei Stableitern (10) zur Ausbildung einer elektrischen Verbindung zugeordnet ist,
wobei die Vielzahl von Stableitern (10) in Stableiter-Gruppen (4) mit jeweils mehreren Stableitern (10) unterteilbar ist und die Vielzahl von Verschaltungsstegen (20) in Verschaltungssteg-Gruppen (5) mit jeweils mehreren Verschaltungsstegen (20) unterteilbar ist,
wobei die Verschaltungsstege (20) einer Verschaltungssteg-Gruppe (5) zur elektrischen Verbindung zweier Stableitern (20) aus verschiedenen Stableitergruppe (5) vorgesehen sind,
wobei die Verschaltungsstege (20) jeweils eine bogenförmige Ausgestaltung, insbesondere eine C-bogenförmige Ausgestaltung, aufweisen, die sich in radialer Richtung und um die Rotationsachse (X) des Stators (1) erstreckt, wobei die Verschaltungssteg-Gruppen (4) zur Ausbildung jeweils einer Verschaltungsebene (6) entlang der Rotationsachse (X) im Bereich eines längsseitigen Endes der Stableiter (10), der jeweils zugeordneten, elektrisch zu verbindenden Stableiter-Gruppen (4), angeordnet sind, wobei die Verschaltungsstege (20) einer Verschaltungssteg-Gruppe (5) ineinander verschachtelt und in radialer Richtung voneinander beabstandet angeordnet sind, **dadurch gekennzeichnet, dass** einzelne Verschaltungsstege (20) einer Verschaltungssteg-Gruppe (5) an zumindest einem ihrer längsseitigen Enden gegenüber der Rotationsachse (X) jeweils in radialer Richtung Z-förmig verlaufen, sodass sich durch die Z-Form eine Kontaktfläche auf axial anderer Höhe als ein Hauptteil des Verschaltungsstegs (20) befindet und ein Wechsel der Verschaltungsebene (6) zur Weiterleitung einer Spannung bzw. eines Stroms an weitere Verschaltungsebenen (6) des Stators (1) möglich ist.

2. Stator (1) nach Anspruch 1,
**dadurch gekennzeichnet, dass**
die Verschaltungsstege (20) einen rechteckigen Querschnitt mit einer Höhe und einer Breite, aufweisen, wobei sich Höhe und Breite vorzugsweise um höchstens das Zweifache unterscheiden.

3. Stator (1) nach Anspruch 1 oder 2,
**dadurch gekennzeichnet, dass**
die Stableiter (10) jeweils Stableiter-Kontaktflächen (11) und die Verschaltungsstege (20) jeweils korrespondierende Verschaltungssteg-Kontaktflächen (21) zur Bereitstellung eines elektrischen Kontaktes aufweisen, wobei sich die Stableiter-Kontaktflächen (11) und die Verschaltungssteg-Kontaktflächen (21) wenigstens teilweise in radialer Richtung des Stators (1) erstrecken.

4. Stator (1) nach einem der vorhergehenden Ansprüche,
**dadurch gekennzeichnet, dass**
Stableiter (10) aus elektrisch voneinander getrennten Stableiter-Gruppen (4) unterschiedliche Längserstreckungen aufweisen, sodass die jeweils zugeordneten Verschaltungssteg-Gruppen (5) in Richtung der Rotationsachse (X) voneinander beabstandet angeordnet sind, zur Ausbildung mehrerer Verschaltungsebenen (6).

5. Stator (1) nach einem der vorhergehenden Ansprüche,
**dadurch gekennzeichnet, dass**
die Verschaltungsstege (20) der Verschaltungssteg-Gruppen (5), die eine Verschaltungsebene (6) ausbilden, in einer Isolationsscheibe (30) angeordnet sind, und/oder die Verschaltungssteg-Gruppen (5) unterschiedlicher Verschaltungsebenen (6) durch wenigstens einen Abstandshalter oder wenigstens eine Halteklammer (30a) voneinander beabstandet angeordnet sind.

6. Stator (1) nach einem der vorhergehenden Ansprüche,
**dadurch gekennzeichnet, dass**
eine Anschlussebene (8) vorgesehen ist mit einer Anschluss-Isolationsscheibe (40), insbesondere ringförmigen Anschluss-Isolationsscheibe (40), und Anschlussstegen (42), zur Bereitstellung wenigstens zweier Phasenanschlüsse und/oder eines Sternpunktanschlusses.

7. Stator (1) nach Anspruch 6,
**dadurch gekennzeichnet, dass**
die Phasenanschlüsse und/oder der Sternanschluss jeweils mittels wenigstens eines Anschlussstückes (41), insbesondere eines blockartigen Anschlussstückes (41), ausgebildet sind, wobei das wenigstens eine Anschlussstück (41) mit einem Anschlusssteg (42) kraftschlüssig und/oder formschlüssig und/oder stoffschlüssig verbunden, insbesondere verschweißt, ist.

8. Stator (1) nach Anspruch 7,
**dadurch gekennzeichnet, dass**
eine Anschlusskomponente (50) vorgesehen ist, die auf die Anschlussstücke (41) aufsetzbar ist, zur mechanischen Fixierung und Beabstandung der Anschlussstücke (41) gegenüber einander.

9. Stator nach Anspruch 8, wobei die Anschlusskomponente (50) wenigstens eine Materialaussparung (51) zur Aufnahme wenigstens eines Anschlussstückes (41) aufweist, sodass das Anschlussstück (41) in der Materialaussparung (51) mechanisch fixierbar ist.

10. Elektrische Maschine mit einem Stator (1) nach einem der vorhergehenden Ansprüche.

## Claims

1. Stator (1) for an electric machine, comprising a plurality of rod conductors (10) arranged radially distributed about an axis of rotation (X) of the stator (1) and each spaced apart from each other, so that the rod conductors (10) extend in the longitudinal direction of the axis of rotation (X),
and with a plurality of interconnection pieces (20), so that one interconnection piece (20) each is associated with two rod conductors (10) to form an electrical connection,
wherein the plurality of rod conductors (10) is dividable into groups (4) of rod conductors with several rod conductors (10) each, and the plurality of interconnection pieces (20) is dividable into groups (5) of interconnection pieces with several interconnection pieces (20) each,
wherein the interconnection pieces (20) of one group (5) of interconnection pieces are provided for an electrical connection of two rod conductors (20) from different groups (5) of rod conductors,
wherein the interconnection pieces (20) each have a curved embodiment, in particular the shape of a C, extending in the radial direction and about the axis of rotation (X) of the stator (1), wherein, in order to form respective interconnection planes (6) along the axis of rotation (X), each group (4) of interconnection pieces is arranged in the region of one longitudinal end of the rod conductors (10) of the associated group (4) of rod conductors that are to be electrically connected wherein the interconnection pieces (20) of one group of interconnection pieces (5) are interlaced and arranged spaced apart in the radial direction, **characterized in that** the interconnection pieces (20) extend at their longitudinal ends with respect to the axis of rotation (X) each in the radial direction in a z-shape, such that by the z-shape, one contact surface is at a height axially different from that of the main portion of the interconnection piece (20) and a change of the interconnection plane (6) for transmitting a voltage or a current to further interconnection planes (6) of the stator (1) is possible.

2. Stator (1) according to claim 1, **characterized in that** the interconnection pieces (20) comprise a rectangular cross-section with a height and width, wherein the height and width preferably differ at most by twice the amount.

3. Stator (1) according to claim 1 or 2, **characterized in that** the rod conductors (10) each comprise rod conductor contact surfaces (11) and the interconnection pieces (20) each corresponding interconnection piece contact surfaces (21) in order to provide an electrical contact, wherein the rod conductor contact surfaces (11) and the interconnection piece contact surfaces (21) at least partially extend in the radial direction of the stator (1).

4. Stator (1) according to one of the preceding claims, **characterized in that** rod conductors (10) of electrically separated groups (4) of rod conductors comprise different longitudinal extensions, so that the respective associated groups (5) of interconnection pieces are arranged spaced apart in the direction of the axis of rotation (X) in order to form several interconnection planes (6).

5. Stator (1) according to one of the preceding claims, **characterized in that** the interconnection pieces (20) of the groups (5) of interconnection pieces forming an interconnection plane (6) are arranged in one insulation disc (30), and/or the groups (5) of interconnection pieces of different interconnection planes (6) are arranged spaced apart by at least one spacer or at least one holding clamp (30a).

6. Stator (1) according to one of the preceding claims, **characterized in that** a connection plane (8) with a connection insulation disc (40), in particular an annular connection insulation disc (40), and connection pieces (42) is provided in order to provide at least two phase connections and/or one neutral terminal.

7. Stator (1) according to claim 8, **characterized in that** the phase terminals and/or the neutral terminal are each embodied by means of at least one connector (41), in particular a block-type connector (41), wherein the at least one connector (41) is connected, in particular welded, to a connection piece (42) with a positive fit and/or a form fit and/or by a material bond.

8. Stator (1) according to claim 9, **characterized in that** a connection component (50) is provided which is placeable onto the connectors (41) to mechanically fix and space apart the connectors (41) with respect to each other.

9. Connection component (50) for a stator (1) according to one of the preceding claims, in particular according to claim 10, wherein the connection component (50) comprises at least one material recess (51) for receiving at least one connector (41), so that the connector (41) is mechanically fixable within the material recess (51).

10. Electric machine with a stator (1) and/or a connection component (50) according to one of the preceding claims.

## Revendications

1. Stator (1) pour une machine électrique comprenant une pluralité de conducteurs en barre (10) qui sont répartis radialement autour d'un axe de rotation (X) du stator (1) et espacés les uns des autres de telle sorte que les conducteurs en barre (10) s'étendent dans la direction longitudinale de l'axe de rotation (X),
ainsi qu'une pluralité de passerelles de raccordement (20), de telle sorte qu'une passerelle de raccordement (20) est associée à deux conducteurs en barre (10) pour former une connexion électrique,
dans lequel la pluralité de conducteurs en barre (10) peut être divisée en groupes de conducteurs en barre (4) avec plusieurs conducteurs en barre respectifs (10) et la pluralité de passerelles de raccordement (20) peut être divisée en groupes de passerelles de raccordement (5) avec plusieurs passerelles de raccordement respectives (20),
dans lequel les passerelles de raccordement (20) d'un groupe de passerelles de raccordement (5) sont prévues pour une connexion électrique de deux conducteurs en barre (20) de différents groupes de conducteurs en barre (5),
dans lequel les passerelles de raccordement (20) présentent chacune une configuration en forme d'arc, en particulier une configuration en forme d'arc en C, qui s'étend dans la direction radiale et autour de l'axe de rotation (X) du stator (1), dans lequel les groupes de passerelles de raccordement (4) sont agencés pour former respectivement un plan de raccordement (6), le long de l'axe de rotation (X) dans la zone d'une extrémité longitudinale des conducteurs en forme de barre (10), des groupes de conducteurs en forme de barre (4) respectivement associés pour une connexion électrique, dans laquelle les passerelles de raccordement (20) d'un groupe de passerelles de raccordement (5) sont agencées raccordées les unes dans les autres et espacées les unes des autres dans la direction radiale, **caractérisé en ce que** les passerelles de raccordement individuelles (20) d'un groupe de passerelles de raccordement (5) s'étendent respectivement en forme de Z dans la direction radiale par rapport à l'axe de rotation (X) au niveau d'au moins l'une de leurs extrémités longitudinales, de sorte que par l'intermédiaire de la forme de Z, une surface de contact se trouve à une hauteur axiale différente de celle d'une partie principale de la passerelle de raccordement (20) et qu'un changement du plan de raccordement (6) est possible pour la transmission d'une tension ou d'un courant au niveau d'un plan de raccordement supplémentaire (6) du stator (1).

2. Stator (1) selon la revendication 1,
**caractérisé en ce que**
les passerelles de raccordement (20) présentent une section transversale rectangulaire avec une hauteur et une largeur, la hauteur et la largeur étant de préférence différentes au maximum du double.

3. Stator (1) selon la revendication 1 ou 2,
**caractérisé en ce que**
les conducteurs en barre (10) présentent respectivement des surfaces de contact de conducteur en barre (11) et les passerelles de raccordement (20) présentent respectivement des surfaces de contact de passerelle de raccordement (21) correspondantes pour fournir un contact électrique, les surfaces de contact de conducteur en barre (11) et les surfaces de contact de passerelle de raccordement (21) s'étendant au moins partiellement dans la direction radiale du stator (1).

4. Stator (1) selon l'une quelconque des revendications précédentes,
**caractérisé en ce que**
les conducteurs en barre (10) de groupes de conducteurs en barre (4) séparés électriquement les uns des autres présentent des étendues longitudinales différentes, de sorte que les groupes de passerelles de raccordement (5) respectifs sont agencés espacés les uns des autres dans la direction de l'axe de rotation (X), pour former plusieurs plans de raccordement (6).

5. Stator (1) selon l'une quelconque des revendications précédentes,
**caractérisé en ce que**
les passerelles de raccordement (20) des groupes de passerelles de raccordement (5), qui forment un plan de raccordement (6), sont agencées dans un disque isolant (30), et/ou les groupes de passerelles de raccordement (5) de différents plans de raccordement (6) sont espacés les uns des autres par au moins une entretoise ou au moins une pince de maintien (30a).

6. Stator (1) selon l'une quelconque des revendications précédentes,
**caractérisé en ce que**
un plan de connexion (8) est prévu avec un disque d'isolation de connexion (40), en particulier un disque d'isolation de connexion annulaire (40), et des passerelles de connexion (42), pour fournir au moins deux connexions de phase et/ou une connexion en point d'étoile.

7. Stator (1) selon la revendication 6,
**caractérisé en ce que**
la connexion de phase et/ou la connexion en étoile sont formées respectivement au moyen d'au moins une pièce de connexion (41), en particulier une pièce de connexion en forme de bloc (41), la au moins une pièce de connexion (41) étant connectée à une passerelle de raccordement (42) par liaison de force et/ou par liaison de forme et/ou par liaison de matière, en particulier par soudage.

8. Stator (1) selon la revendication 7,
**caractérisé en ce que**
un composant de connexion (50), qui peut être monté sur les pièces de connexion (41), est prévu pour une fixation mécanique et un écartement des pièces de connexion (41) les unes par rapport aux autres.

9. Stator selon la revendication 8, dans lequel le composant de connexion (50) présente au moins un évidement de matériau (51) pour recevoir au moins une pièce de connexion (41), de sorte que la pièce de connexion (41) peut être fixée mécaniquement dans l'évidement de matériau (51).

10. Machine électrique avec un stator (1) selon l'une quelconque des revendications précédentes.
